# DEMANDE DE BREVET EUROPEEN

(11) **EP 0 536 016 A1**
(43) Date de publication de la demande: **07.04.1993**
(21) Numéro de dépôt: 92402524.0
(22) Date de dépôt: 15.09.1992
(51) Int. Cl.: B25J 19/00

(54) **Dispositif de refroidissement adaptable sur un télémanipulateur et son utilisation pour une intervention dans un milieu hostile à température élevée**

(30) Priorité: 30.09.1991 FR 9111999
(71) Demandeur: FRAMATOME, 92400 Courbevoie (FR)
(72) Inventeur: de Magny, Emmanuel, F-69004 Lyon (FR)
(74) Mandataire: Polus, Camille

(57) **Abrégé**

Le télémanipulateur comporte des tronçons rigides (12,14,16) maintenus à une température adaptée à leur fonctionnement par un dispositif selon l'invention. Ce dernier comprend une enceinte (37,38,39), entourant chaque tronçon rigide (12,14,16), raccordée à une source de gaz caloporteur haute pression. Cette enceinte comprend deux chambres (92,94), respectivement à haute et basse pression, raccordées entre elles par des moyens (102) de détente du gaz. Les tronçons rigides (12,14,16) du télémanipulateur sont reliés entre eux par des articulations entourées par des soufflets (40,42). Chaque soufflet est alimenté par le gaz caloporteur provenant de la chambre basse pression (94) d'une enceinte (37,38,39) adjacente au soufflet. Le gaz circule dans un circuit fermé comprenant les chambres (92,94) et les soufflets (40,42) en absorbant les calories se propageant à travers le télémanipulateur.

Application à une intervention dans un réacteur à neutrons rapides.

## Description

La présente invention concerne un dispositif de refroidissement adaptable sur un télémanipulateur et son utilisation pour une intervention dans un milieu hostile à température élevée.

L'invention s'applique en particulier à un dispositif de refroidissement pour un télémanipulateur destiné à être utilisé dans un réacteur à neutrons rapides.

Ce type de réacteur comporte un coeur, disposé au centre d'une cuve, la partie supérieure de celle-ci étant fermée par une dalle à laquelle est suspendue la cuve. Le coeur est immergé dans du sodium liquide utilisé comme fluide caloporteur. Un gaz de couverture compatible avec le sodium, habituellement de l'argon, occupe l'espace libre de la cuve compris entre le niveau de sodium liquide et la dalle. Le gaz de couverture constitue un environnement radioactif, à température élevée, et chargé en aérosols de sodium.

Après un arrêt du réacteur, notamment pour effectuer des opérations normales de manutention des assemblages combustibles, la température du gaz de couverture est ramenée jusqu'à environ 150°. Cette température correspond à ce que l'homme de métier appelle un arrêt froid du réacteur.

Au cours de ces arrêts, les opérations normales de manutention sont effectuées en utilisant des moyens adaptés à la manutention des assemblages combustibles. En dehors de ces opérations normales, il est possible d'effectuer des interventions exceptionnelles dans les parties radioactives du réacteur, par exemple la disposition d'une caméra vidéo dans le gaz de couverture, qui nécessitent l'intervention d'un robot ou d'un télémanipulateur articulé pouvant se mouvoir de façon analogue à un bras humain. Le type de télémanipulateur, pour lequel le dispositif objet de l'invention est prévu, peut fonctionner habituellement dans des milieux radioactifs mais il est généralement inadapté aux températures élevées, en particulier à la température du gaz de couverture lors d'un arrêt froid du réacteur.

L'invention a pour but de réaliser des interventions exceptionnelles dans un milieu radioactif à température élevée, par exemple dans le gaz de couverture d'une cuve de réacteur nucléaire lors d'un arrêt froid de celui-ci, en utilisant un télémanipulateur, de type connu, qui n'a pas été conçu pour fonctionner à ladite température élevée, ceci en conservant une grande partie des possibilités de mouvement en rotation et de débattement du télémanipulateur.

A cet effet, l'invention a pour objet un dispositif de refroidissement, par circulation d'un gaz caloporteur, d'un télémanipulateur comprenant au moins un tronçon rigide, caractérisé en ce qu'il comporte une enceinte rigide, disposée autour de la paroi externe du tronçon rigide, raccordée à une source de gaz caloporteur haute pression, cette enceinte comprenant deux chambres, respectivement à haute et basse pression, raccordées entre elles par des moyens de détente du gaz, la chambre haute pression étant munie d'une ouverture d'admission du gaz haute pression et la chambre basse pression étant munie d'une ouverture de refoulement du gaz basse pression à l'extérieur de cette chambre.

Suivant d'autres caractéristiques de l'invention:
- les chambres haute pression et basse pression sont sensiblement annulaires et coaxiales de façon à définir une chambre interne entourant la paroi externe du tronçon rigide et une chambre externe entourant la chambre interne ;
- la chambre interne est la chambre haute pression ;
- les deux chambres interne et externe sont séparées par une paroi mitoyenne et les moyens de détente comprennent au moins un orifice calibré traversant cette paroi ;
- l'ouverture d'admission du gaz de la chambre haute pression et l'ouverture de refoulement du gaz de la chambre basse pression sont disposées au voisinage d'une même extrémité de l'enceinte rigide et l'orifice calibré est disposé au voisinage de l'extrémité opposée de l'enceinte ;
- la paroi externe de la chambre externe est recouverte, au moins partiellement, d'un isolant thermique ;
- l'isolant comprend une couche interne de silicone et une couche externe d'acier inoxydable toilé.

Le dispositif selon l'invention est appliqué au refroidissement d'un télémanipulateur comprenant au moins deux tronçons rigides reliés entre eux par une articulation.

Suivant des caractéristiques particulières de ce dispositif :
- il comporte une enceinte déformable ou soufflet, disposée autour de l'articulation, munie d'un orifice d'admission de gaz, communiquant avec la chambre basse pression d'un des tronçons rigides reliés par l'articulation, et d'un orifice de refoulement du gaz à l'extérieur de l'enceinte déformable ;
- l'orifice d'admission de gaz dans le soufflet est ménagé dans une paroi solidaire d'un premier tronçon rigide et l'orifice de refoulement du gaz du soufflet est ménagé dans une paroi solidaire du second tronçon rigide relié au premier par l'articulation ;
- des anneaux de renforcement sont disposés dans des ondes du soufflet ;
- le soufflet est recouvert, sur sa surface externe, d'un revêtement d'isolation thermique ;
- le revêtement du soufflet comprend une couche de silicone ;
- les enceintes rigides sont raccordées à la source de gaz caloporteur haute pression par des conduits d'alimentation distincts ;
- les chambres haute pression et basse pression sont raccordées à un circuit pneumatique dans lequel le gaz caloporteur circule en circuit fermé.

Le dispositif selon l'invention est appliqué au refroidissement d'un télémanipulateur comprenant au moins un organe exothermique disposé sensiblement sur l'axe d'un tronçon rigide.

Suivant une caractéristique de ce dispositif celui-ci comporte au moins un écran thermique, sensiblement plan, disposé à peu près perpendiculairement à l'axe du tronçon rigide, au voisinage de l'organe exothermique.

L'invention a également pour objet l'utilisation du dispositif précité pour le refroisissement d'un télémanipulateur en opération dans un milieu hostile, confiné, à température élevée.

Suivant des caractéristiques de cette utilisation:
- le milieu hostile est le gaz de couverture d'un réacteur à neutrons rapides, lors d'un arrêt froid de ce réacteur ;
- le gaz caloporteur est compatible avec le gaz de couverture ;
- le gaz caloporteur comprend de l'azote.

Suivant une variante de cette utilisation :
- le gaz caloporteur comprend de l'argon.

Un exemple de réalisation de l'invention sera décrit ci-dessous en se référant aux dessins annexés dans lesquels :
- la figure 1 est une vue schématique en élévation, avec des arrachements, d'un télémanipulateur muni d'un dispositif de refroidissement selon l'invention ;
- la figure 2 est une vue schématique en coupe longitudinale d'une enceinte rigide du dispositif de refroidissement selon l'invention entourant un tronçon rigide du télémanipulateur;
- la figure 3 est une vue partielle schématique en section transversale de cette enceinte rigide.

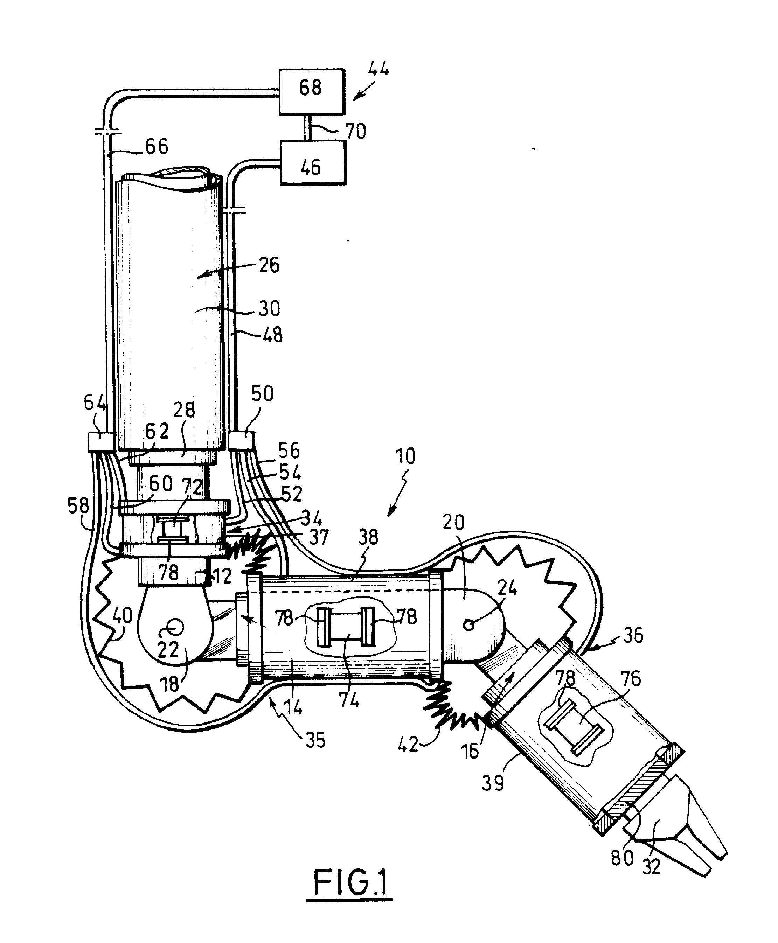

On a représenté schématiquement à la figure 1 un télémanipulateur 10, de type connu, destiné à être utilisé pour des interventions exceptionnelles dans le gaz de couverture d'une cuve de réacteur à neutrons rapides, lors d'un arrêt froid de ce réacteur. Ce télémanipulateur 10 est adapté à la radioactivité ambiante existant habituellement dans le gaz de couverture.

Le télémanipulateur 10 comprend trois tronçons rigides 12,14,16 reliés entre eux par deux articulations 18,20 munies d'axes de pivotement respectifs 22,24. Le télémanipulateur constitue un ensemble articulé. Habituellement, le tronçon proximal 12 est appelé épaule, le tronçon médian 14 est appelé bras et le tronçon distal 16 est appelé avant-bras. L'épaule 12 est fixée sur un support télescopique 26 dont on a représenté deux éléments cylindriques 28,30, l'élément 28, portant l'épaule 12, étant représenté en position escamotée dans l'élément 30.

L'avant-bras 16 porte sur son extrémité libre une pince 32 destinée notamment à tenir par exemple un outil ou un moyen de vision, non représenté.

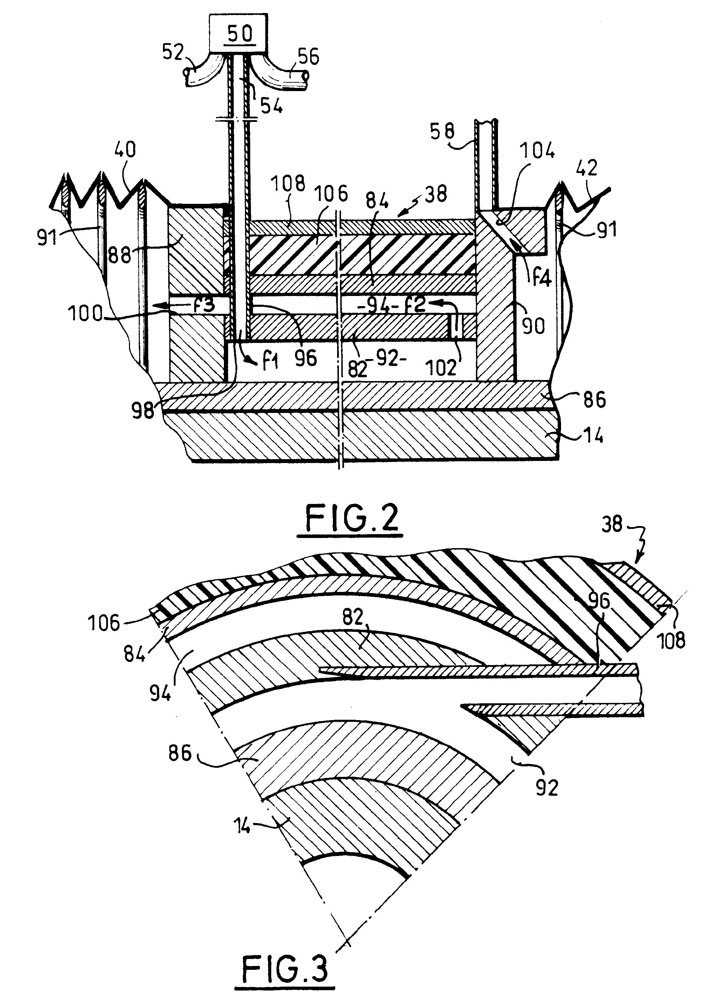

Les tronçons rigides 12,14,16 comportent habituellement des organes dont le fonctionnement est prévu pour une température ne dépassant pas 50°. Par ailleurs, la température du gaz de couverture est d'environ 150° lors d'un arrêt froid du réacteur. Pour pallier l'échauffement excessif de ses organes, le télémanipulateur est muni de dispositifs de refroidissement selon l'invention 34,35,36. Ces dispositifs comprennent respectivement des enceintes rigides 37,38,39, de forme générale cylindrique, entourant les tronçons rigides 12,14,16, à l'intérieur desquelles circule un gaz caloporteur compatible avec le gaz de couverture. L'enceinte rigide 38, entourant le bras 14, est montrée plus en détail aux figures 2 et 3 et sera décrite ultérieurement.

Dans un même but d'utilisation, les dispositifs de refroidissement 35,36 comprennent, en plus des enceintes rigides 38,39, des enceintes déformables ou soufflets annulaires 40,42 entourant respectivement les articulations 18,20. Ces soufflets 40,42 comportent respectivement des moyens de communication avec les enceintes rigides 38,39, permettant leur alimentation en gaz caloporteur, qui seront décrits ultérieurement.

On voit également sur la figure 1 que les enceintes rigides 12,14,16 et les soufflets 40,42 sont raccordés à un circuit pneumatique 44 dans lequel circule le gaz caloporteur en circuit fermé. Ce circuit 44 comprend un compresseur 46 refoulant le gaz caloporteur à une haute pression d'environ 40 bars dans un conduit d'alimentation ombilical 48. Ce conduit 48 est raccordé à un détendeur 50 disposé à proximité des parties à refroidir du télémanipulateur. Le détendeur 50 réduit la pression du gaz caloporteur à environ 5 bars. Les enceintes rigides 37,38,39 sont respectivement alimentées en gaz caloporteur par des conduits souples d'alimentation 52,54,56 raccordés à la sortie du détendeur 50. Le gaz caloporteur est détendu à l'intérieur de l'enceinte rigide par des moyens qui seront décrits ultérieurement.

Deux conduits souples 58, 60 de refoulement du gaz détendu provenant des soufflets 40,42 et un conduit souple 62 de refoulement du gaz détendu provenant de l'enceinte rigide 37 entourant l'épaule sont raccordés à un même collecteur 64 relié à un conduit de refoulement ombilical 66. Ce conduit 66 ramène le gaz caloporteur, après son échauffement, dans un groupe frigorifique 68 dans lequel il est refroidi puis renvoyé à travers un conduit 70 dans le compresseur 46.

On voit également sur la figure 1 que des organes exothermiques 72,74,76, par exemple des moteurs destinés à faire pivoter les tronçons rigides autour de leurs articulations ou à actionner un outil, représentés schématiquement par des rectangles, sont disposés à l'intérieur des tronçons rigides 12,14,16.

Des écrans thermiques 78, de forme générale plane, en matériau isolant, sont disposés de part et d'autre des organes exothermiques 72,74,76, à peu près perpendiculairement à l'axe longitudinal des tronçons rigides qui les portent. Ces écrans entravent la propagation axiale des calories émises par les organes exothermiques. Il va de soi que ces écrans peuvent avoir des formes différentes adaptées à la forme des organes qu'ils entourent.

Dans un même but, l'extrémité libre de l'avant-bras 16 comporte un disque 80 en matériau isolant, disposé perpendiculairement à l'axe de l'avant-bras 16, faisant écran à la chaleur axiale reçue du milieu et transmise par la pince.

On a représenté schématiquement à la figure 2 l'enceinte rigide 38 entourant le bras 14. On voit sur cette figure que l'enceinte 38 comprend deux parois cylindriques coaxiales 82,84, l'une interne et l'autre externe, disposées autour d'un manchon 86 ou sommier recouvrant la paroi du bras 14. Ces parois coaxiales 82,84 s'étendent longitudinalement entre deux disques d'extrémité 88,90.

Les disques d'extrémité 88,90 forment des supports pour les soufflets annulaires 40,42. Une des deux extrémités du soufflet annulaire 40 est emmanchée et fixée sur le bord périphérique du disque d'extrémité 88 par des moyens non représentés. De même, une des deux extrémités du soufflet 42 est emmanchée et fixée sur le bord périphérique du disque d'extrémité 90. On voit également sur la figure 2 que les soufflets 40,42 comportent des anneaux de renforcement 91 disposés dans leurs ondes.

La paroi cylindrique interne 82 délimite une chambre interne 92 entre sa surface interne et la surface externe du sommier 86. La paroi cylindrique externe 84, coaxiale à la paroi interne 82, délimite une chambre externe 94 entre sa surface interne et la surface externe de la paroi interne 82. Cette paroi 82 est mitoyenne aux chambres 92,94 interne et externe.

La chambre interne 92 est raccordée au conduit souple 54 d'alimentation en gaz caloporteur de l'enceinte 38 par un conduit 96, prolongeant celui-ci et débouchant dans la chambre interne 92 par une ouverture d'admission du gaz 98. La chambre externe 94 est reliée au volume délimité par le soufflet 40 par un orifice de communication 100 traversant axialement le disque d'extrémité 88. L'orifice 100 est un orifice d'admission de gaz caloporteur pour le soufflet 40.

La paroi mitoyenne 82, séparant les deux chambres 92,94, est munie d'orifices 102 formant des moyens de détente du gaz entre ces deux chambres 92,94. Ces orifices 102, dont un seul est représenté à la figure 2, sont espacés suivant la circonférence de la paroi mitoyenne 82 et traversent radialement celle-ci. Ils sont en outre calibrés de façon à détendre le gaz caloporteur, provenant de la chambre interne 92, jusqu'à une pression voisine de la pression du gaz de couverture, qui peut être de 1 bar, dans lequel le télémanipulateur 10 est en opération.

L'ouverture 98 d'admission du gaz et l'orifice de communication 100 sont disposés au voisinage du disque d'extrémité 88, à gauche en considérant la figure 2. Les orifices calibrés 102 sont disposés à l'autre extrémité de l'enceinte 38, au voisinage du disque d'extrémité 90, à droite en considérant la figure 2. Le gaz caloporteur circule, d'une part dans la chambre interne ou haute pression 92, suivant une direction générale axiale, de la gauche vers la droite, et, d'autre part dans la chambre externe ou basse pression 94 suivant un sens opposé au précédent, de la droite vers la gauche. Le gaz provenant de la chambre basse pression 94 est envoyé à travers l'orifice de communication 100 dans le soufflet 40. Les sens de l'écoulement du gaz dans les chambres à haute pression et à basse pression sont représentés sur la figure 2 par les flèches f1,f2,f3.

On voit également sur la figure 2 que le disque d'extrémité 90, sur lequel est fixé le soufflet 42, comporte un orifice 104 de refoulement du gaz basse pression circulant dans le soufflet 42. Le sens de l'écoulement du gaz à travers l'orifice 104 est représenté par la flèche f4. L'orifice 104 est raccordé, par des moyens non représentés, au conduit souple 58 de refoulement du gaz détendu.

L'épaule 12 et l'avant-bras 16, reliés au bras 12 par les articulations 18,20, comportent respectivement des enceintes rigides 37,39 similaires à l'enceinte 38 du bras 14, décrite ci-dessus.

L'extrémité du soufflet 40, opposée à celle représentée sur la figure 2, est fixée sur un disque d'extrémité, analogue au disque 90, porté par l'épaule 14 et muni d'un orifice de refoulement du gaz vers l'extérieur du soufflet. De même, l'extrémité du soufflet 42, opposée à celle représentée sur la figure 2, est fixée sur un disque, analogue au disque d'extrémité 88, porté parl'avant-bras 16 et muni d'un orifice d'admission de gaz communiquant avec la chambre basse pression de l'enceinte 39 disposée autour de l'avant-bras 16.

Ainsi, l'orifice d'admission de gaz dans chaque soufflet 40,42 est ménagé dans un disque solidaire d'un premier tronçon rigide et l'orifice de refoulement du gaz du soufflet est ménagé dans un disque solidaire d'un second tronçon rigide, ce tronçon étant relié au premier par l'articulation recouverte par le soufflet.

L'alimentation en gaz caloporteur est indépendante pour chaque tronçon rigide 12,14,16. L'enceinte 39 entourant l'avant-bras 16 est alimentée en gaz caloporteur par le conduit 56. Le gaz se détend dans les orifices calibrés de l'enceinte 39. Il est ensuite envoyé dans le soufflet 42, entourant l'articulation 20, puis à l'extérieur du soufflet 42 dans le conduit de refoulement 58. L'enceinte 38 entourant le bras 14 est alimentée en gaz caloporteur par le conduit 54. Le gaz détendu provenant de la chambre basse pression 94 est envoyé dans le soufflet 40, entourant l'articulation 18, puis à l'extérieur du soufflet 40 dans le conduit de refoulement 60. L'enceinte 37 entourant l'épaule 12 est alimentée en gaz caloporteur par le conduit 52. Le gaz de la chambre basse pression de l'enceinte 37 est envoyé directement dans le conduit de refoulement 62.

La représentation graphique du conduit d'alimentation 96 sur la figure 2 ne correspond pas à la réalité mais permet une meilleure compréhension de la circulation du gaz caloporteur dans l'enceinte 38. La figure 3 représente la disposition réelle du conduit 96. Sur cette figure on voit que le conduit d'alimentation 96 débouche tangentiellement dans la chambre haute pression 92 de façon à éviter la formation d'une zone d'arrêt du gaz caloporteur, sur la surface externe du sommier 86, risquant de provoquer le réchauffement de celui-ci.

On voit aux figures 2 et 3 que la paroi externe 84 de la chambre basse pression 94 est recouverte par deux couches 106,108 d'isolants thermiques. Des couches d'isolant thermique similaires sont disposées sur les enceintes 37,39 de l'épaule 12 et de l'avant-bras 16. Dans un même but d'isolation, les soufflets 40,42 comportent un revêtement d'isolation thermique non représenté sur les figures.

Dans l'exemple décrit,le gaz de couverture est de l'argon. Parmi les gaz caloporteurs compatibles avec l'argon on peut choisir par exemple l'azote ou l'argon lui-même. Dans l'exemple décrit, le gaz caloporteur utilisé est de l'azote dont l'utilisation est bien maitri- sée par l'homme de métier et dont la chaleur massique est plus élevée que celle de l'argon.

Les matériaux constituant le dispositif selon l'invention sont compatibles avec le gaz de couverture (argon) et le gaz caloporteur (azote). En particulier, la paroi interne 82 et la paroi externe 84 délimitant respectivement la chambre interne 92 et la chambre externe 94 sont en acier austénitique inoxydable. Les couches 106,108 d'isolants thermiques sont respectivement en silicone (couche interne) et en acier inoxydable toilé (couche externe) et les soufflets 40,42 comportent un revêtement d'isolation thermique en silicone.

Le télémanipulateur 10 est soumis à un flux de chaleur radial provenant essentiellement de l'extérieur du télémanipulateur et de ses organes exothermiques, et à un flux de chaleur axial dont l'intensité est environ dix fois plus faible que celle du flux de chaleur radial.

Les tronçons rigides 12,14,16 du télémanipulateur 10 doivent être maintenus à une température inférieure à environ 50° pour pouvoir fonctionner correctement. Les couches d'isolants thermiques disposées autour des tronçons rigides 12,14,16 et le revêtement d'isolation thermique disposé autour des soufflets 40,42 font écran au flux de chaleur radial provenant de l'extérieur. Les calories qui traversent les couches d'isolants thermiques sont évacuées par le gaz caloporteur circulant dans les chambres interne et externe des enceintes rigides. De même, le gaz caloporteur circulant dans les soufflets 40,42 refroidit les articulations 18,20.

Les deux chambres haute et basse pression des enceintes rigides permettent au gaz caloporteur de circuler dans un volume restreint en formant des paliers thermiques entre l'intérieur du télémanipulateur et le gaz de couverture pour le refroidissement efficace des tronçons rigides. Ainsi, on ne crée pas de gradients de température et on n'impose pas au gaz une vitesse trop élevée provoquant le réchauffement de celui-ci par frottement. Les enceintes rigides sont donc peu volumineuses et permettent de conserver, presque en totalité, les possibilités de débattement des tronçons rigides du télémanipulateur.

Les pressions du gaz dans les chambres haute et basse pression des enceintes rigides sont déterminées en particulier par son débit massique nécessaire pour évacuer les calories en excès et par les dimensions de ces chambres.

La pression dans la chambre basse pression dépend en particulier de l'existence d'un raccordement de cette chambre à un soufflet adjacent, ce qui est le cas des enceintes entourant le bras 14 et l'avant-bras 16. Cette dernière condition est imposée par le fait que, en prenant l'exemple de l'enceinte 38 entourant le bras 14, l'azote contenu dans la chambre basse pression 94 est envoyé dans le soufflet 40 et que la pression de l'azote à l'intérieur du soufflet doit être limitée par rapport à la pression du milieu, par exemple la différence de pression entre l'intérieur et l'extérieur du soufflet ne doit pas dépasser 0,5 bar. Les anneaux de renfort 91 disposés dans les ondes des soufflets 40,42, permettent de pallier les effets dus à l'écart de pression de part et d'autre de la paroi des soufflets.

L'azote circulant dans les enceintes rigides 37,38,39 permet, d'une part, d'absorber les calories du flux radial de chaleur provenant du gaz de couverture, et d'autre part, d'absorber les calories du flux radial de chaleur provenant des organes exothermiques, comme les moteurs, disposés à l'intérieur des tronçons rigides 12,14,16.

La propagation axiale des calories est freinée en particulier par les écrans thermiques disposés dans l'axe des organes chauds portés par le télémanipulateur. En effet, le disque 80 en matériau isolant protège l'avant-bras 16 en faisant écran aux flux de chaleur axial engendré par le réchauffement de la pince 32 ou par un outil porté par cette pince. De même les écrans thermiques 78, disposés dans l'axe des tronçons rigides, de part et d'autre des moteurs, réduisent la propagation axiale des calories émises par ces moteurs.

L'azote ciculant dans les soufflets des articulations du télémanipulateur réduit également le flux de chaleur axial qui se propage par ces articulations.

Les conduits d'alimentation en gaz caloporteur 52,54,56 et les conduits de refoulement de ce gaz détendu 58,60,62 sont reliés à un même circuit pneumatique 44 fermé afin d'éviter tout relâchement de gaz caloporteur dans le gaz de couverture.

Le dispositif selon l'invention permet d'adapter un télémanipulateur pour effectuer des interventions exceptionnelles dans le gaz de couverture d'un réacteur à neutrons rapides.

L'invention permet de maintenir les tronçons rigides du télémanipulateur à une température inférieure à celle du gaz de couverture, adaptée à leur fonctionnement, en évitant la formation de gradients de température résultant de refroidissements locaux.

Le dispositif selon l'invention peut s'adapter à des télémanipulateurs existants et permet d'étendre considérablement les applications de ceux-ci. Les paramètres de pression et de débit du gaz caloporteur circulant dans le dispositif selon l'invention sont réglables en fonction de la température du gaz de couverture et de la température maximale de fonctionnement du télémanipulateur.

L'invention ne se limite pas à une utilisation dans le gaz de couverture d'un réacteur à neutrons rapides. Elle s'applique également à des milieux hostiles, confinés, en présence d'une température élevée, d'un rayonnement ou de tout autre condition inhabituelle nécessitant un confinement et un refroidissement du télémanipulateur.

De même l'invention ne se limite pas à des tronçons et des enceintes rigides de sections circulaires. L'invention peut être appliquée à un télémanipulateur comprenant une simple perche.

## Revendications

1. Dispositif de refroidissement, par circulation d'un gaz caloporteur, d'un télémanipulateur (10) comprenant au moins un tronçon rigide (12,14,16), caractérisé en ce qu'il comporte une enceinte rigide (37,38,39), disposée autour de la paroi externe du tronçon rigide, raccordée à une source (50) de gaz caloporteur haute pression, cette enceinte (37,38,39) comprenant deux chambres (92,94), respectivement à haute et basse pression, raccordées entre elles par des moyens (102) de détente du gaz, la chambre haute pression (92) étant munie d'une ouverture (98) d'admission du gaz haute pression et la chambre basse pression (94) étant munie d'une ouverture (100) de refoulement du gaz basse pression à l'extérieur de cette chambre.

2. Dispositif selon la revendication 1, caractérisé en ce que les chambres (92,94) haute pression et basse pression sont sensiblement annulaires et coaxiales de façon à définir une chambre interne (92) entourant la paroi externe du tronçon rigide (12,14,16) et une chambre externe (94) entourant la chambre interne (92).

3. Dispositif selon la revendication 2, caractérisé en ce que la chambre interne (92) est la chambre haute pression (92).

4. Dispositif selon la revendication 2 ou 3, caractérisé en ce que les deux chambres (92,94) interne et externe sont séparées par une paroi mitoyenne (82) et en ce que les moyens de détente (102) comprennent au moins un orifice calibré (102) traversant cette paroi (82).

5. Dispositif selon la revendication 4, caractérisé en ce que l'ouverture (98) d'admission du gaz de la chambre haute pression (92) et l'ouverture (100) de refoulement du gaz de la chambre basse pression (94) sont disposées au voisinage d'une même extrémité de l'enceinte rigide (37,38,39) et en ce que l'orifice calibré (102) est disposé au voisinage de l'extrémité opposée de l'enceinte.

6. Dispositif selon l'une quelconque des revendications 2 à 5, caractérisé en ce que la paroi externe (84) de la chambre externe (94) est recouverte, au moins partiellement, d'un isolant thermique (106,108).

7. Dispositif selon la revendication 6, caractérisé en ce que l'isolant comprend une couche interne (106) de silicone et une couche externe (108) d'acier inoxydable toilé.

8. Dispositif selon l'une quelconque des revendications précédentes, le télémanipulateur (10) comprenant au moins deux tronçons rigides (12,14,16) reliés entre eux par une articulation (18,20), caractérisé en ce qu'il comporte une enceinte déformable ou soufflet (40,42), disposée autour de l'articulation (18,20), munie d'un orifice (100) d'admission de gaz, communiquant avec la chambre basse pression (94) d'un des tronçons rigides reliés par l'articulation, et d'un orifice (104) de refoulement du gaz à l'extérieur de l'enceinte déformable (40,42).

9. Dispositif selon la revendication 8, caractérisé en ce que l'orifice (100) d'admission de gaz dans le soufflet (40,42) est ménagé dans une paroi (88) solidaire d'un premier tronçon rigide (12,14,16) et l'orifice (104) de refoulement du gaz du soufflet (40,42) est ménagé dans une paroi (90) solidaire du second tronçon rigide (12, 14,16) relié au premier par l'articulation (18,20).

10. Dispositif selon la revendication 8 ou 9, caractérisé en ce que des anneaux de renforcement (91) sont disposés dans des ondes du soufflet (40,42).

11. Dispositif selon l'une quelconque des revendications 8 à 10, caractérisé en ce que le soufflet (40,42) est recouvert, sur sa surface externe, d'un revêtement d'isolation thermique.

12. Dispositif selon la revendication 11, caractérisé en ce que le revêtement du soufflet (40,42) comprend une couche de silicone.

13. Dispositif selon l'une quelconque des revendications 8 à 12, caractérisé en ce que les enceintes rigides (37,38,39) sont raccordées à la source (50) de gaz caloporteur haute pression par des conduits d'alimentation (52,54,56) distincts souples.

14. Dispositif selon l'une quelconque des revendications précédentes, caractérisé en ce que les chambres (92,94) haute pression et basse pression sont raccordées à un circuit pneumatique (44) dans lequel le gaz caloporteur circule en circuit fermé.

15. Dispositif selon l'une quelconque des revendications 2 à 14, un organe exothermique (72,74,76) étant disposé sensiblement sur l'axe d'un tronçon rigide, caractérisé en ce qu'il comporte au moins un écran thermique (78,80), sensiblement plan, disposé à peu près perpendiculairement à l'axe du tronçon rigide (12,14,16), au voisinage de l'organe exothermique (72,74,76).

16. Utilisation d'un dispositif selon l'une quelconque des revendications précédentes pour le refroisissement d'un télémanipulateur en opération dans un milieu hostile, confiné, à température élevée.

17. Utilisation selon la revendication 16, caractérisée en ce que le milieu hostile est le gaz de couverture d'un réacteur à neutrons rapides, lors d'un arrêt froid de ce réacteur.

18. Utilisation selon la revendication 17, caractérisée en ce que le gaz caloporteur est compatible avec le gaz de couverture.

19. Utilisation selon la revendication 18, caractérisée en ce que le gaz caloporteur comprend de l'azote.

20. Utilisation selon la revendication 18, caractérisée en ce que le gaz caloporteur comprend de l'argon.
